Europäisches Patentamt

**European Patent Office**

**Office européen des brevets**

(19)

(11) Veröffentlichungsnummer: **0 032 600**
A1

(12)

# EUROPÄISCHE PATENTANMELDUNG

(21) Anmeldenummer: **80201164.3**

(22) Anmeldetag: **05.12.80**

(51) Int. Cl.³: **F 02 C 7/12**, F 01 P 1/06,
F 01 P 3/12

(30) Priorität: **17.01.80 DE 3001493**

(43) Veröffentlichungstag der Anmeldung: **29.07.81**
**Patentblatt 81/30**

(84) Benannte Vertragsstaaten: **FR GB IT SE**

(71) Anmelder: **Dr.Ing.h.c. F. Porsche Aktiengesellschaft,**
**Porschestrasse 42, D-7000 Stuttgart 40 (DE)**

(72) Erfinder: **Mezger, Hans, Dipl.-Ing., Dürer Strasse 17,**
**D-7144 Freiberg (DE)**

(54) **Aufgeladene, durch einen Kühlstrom gekühlte Brennkraftmaschine.**

(57) Die aufgeladene, durch einen Kühlstrom gekühlte Brennkraftmaschine (1) mit einem von einer Abgasturbine (4) angetriebenen Verdichter (3) weist ein stromab des Auslaßventiles der Brennkraftmaschine (1) angeordnetes, den Abgasstrom vor der Abgasturbine beeinflußbares und in Abhängigkeit vom Ladeluftdruck gesteuertes Ladedruckregelventil (12) auf.

Zur besseren Kühlung des Ladedruckregelventiles (12) ist das Ladedruckregelventil (12) in den Kühlstrom der Brennkraftmaschine (1) integriert.

Aufgeladene, durch einen Kühlstrom
gekühlte Brennkraftmaschine.


Die Erfindung bezieht sich auf eine aufgeladene, durch einen
Kühlstrom gekühlte Brennkraftmaschine, mit einem von einer
Abgasturbine angetriebenen Verdichter und einem stromab des
Auslaßventiles der Brennkraftmaschine angeordneten, den
Abgasstrom vor der Abgasturbine beeinflußbaren und in Abhängigkeit vom Ladeluftdruck gesteuerten Ladedruckregelventil.

Bei aufgeladenen Brennkraftmaschinen der genannten Art ist es
bekannt (US-PS 2 684 569), das Ladedruckregelventil in
unmittelbarer Nähe des Zylinderkopfes der Brennkraftmaschine
anzuordnen. Dieses durch die heißen Abgase der Brennkraftmaschine ohnehin stark erhitzte Ladedruckregelventil wird bei
der Anordnung in Zylinderkopfnähe durch die Abstrahlungswärme
der Brennkraftmaschine noch weiter aufgeheizt. Zur Vermeidung
von Temperaturschäden an dem Ladedruckregelventil wird dieses
darum aus temperaturbeständigen und teueren Materialien
gefertigt, ohne daß dadurch jedoch Temperaturschäden bei sehr
hohen Temperaturen mit Sicherheit vermieden werden können.

Zwar ist es auch bekannt (Porsche Turbo Kundendienstinformation, Modell 1978), das Ladedruckregelventil nicht in
unmittelbarer Nähe des Zylinderkopfes anzuordnen, so daß das
Ladedruckregelventil nicht in dem gleichen Umfang der
Abstrahlungswärme der Brennkraftmaschine ausgesetzt ist, wie
ein Ladedruckregelventil bei einer Anordnung nach der US-PS
2 684 569. Jedoch bewirken auch bei dieser Anordnung eines
Ladedruckregelventils allein die heißen Abgase und in geringem
Umfang auch die im Motorraum eines Kraftfahrzeuges vorhandene
Stauwärme eine derart starke Erhitzung des Ladedruckregelventils, daß auch bei diesem Temperaturschäden möglich sind.

Aufgabe der Erfindung ist es, eine aufgeladene Brennkraftmaschine mit einem abgasseitig gesteuerten Ladedruckregelventil
zu schaffen, bei dem Schäden an dem Ladedruckregelventil
infolge Überhitzung auf einfache Weise sicher vermieden werden.

Erfindungsgemäß wird diese Aufgabe dadurch gelöst, daß das
Ladedruckregelventil in den Kühlstrom der Brennkraftmaschine
integriert ist.

Auf diese Weise wird die Temperatur des Ladedruckregelventiles
in jeder Betriebsphase der Brennkraftmaschine derart gering
gehalten, daß neben dem Vorteil der hohen Betriebssicherheit
des Ladedruckregelventils auch der Vorteil gegeben ist, das
Ladedruckregelventil bei einer Integration in den Kühlstrom aus
temperaturunbeständigerem und somit billigerem Material
fertigen zu können. Darüber hinaus ist bei einer entsprechenden
Intensivierung der Kühlung des Ladedruckregelventils eine
Fertigung z.B. des Gehäuses desselben aus Leichtmetall möglich,
wodurch eine erhebliche Gewichtsersparnis erzielt wird.

Ist der Kühlstrom Luft, so ist ein zweckmässiges Ausführungsbeispiel der Erfindung darin zu sehen, daß dieser ein Kühlluftgehäuse durchströmt, in dem das Ladedruckregelventil
angeordnet ist. Ist der Kühlstrom Wasser, so ist ein zweckmäßiges Ausführungsbeispiel der Erfindung darin zu sehen, daß
dieser durch einen Kühlkanal der Brennkraftmaschine strömt,
benachbart dem das Ladedruckregelventil in Wärmetausch mit dem
Kühlkanal angeordnet ist. Dabei kann das Ladedruckregelventil
einen Kühlkanal aufweisen, der mit dem Kühlkanal der Brennkraftmaschine durch eine Durchflußöffnung verbunden ist.

In der Zeichnung ist die Erfindung in zwei beispielsweisen
Ausführungsformen dargestellt. Es zeigt

Fig. 1    eine aufgeladene Brennkraftmaschine mit einem
          abgasseitig gesteuerten Ladedruckregelventil, bei der
          der Kühlstrom Luft ist, und

Fig. 2    eine aufgeladene Brennkraftmaschine mit einem
          abgasseitig gesteuerten Ladedruckregelventil, bei
          der der Kühlstrom Wasser ist.

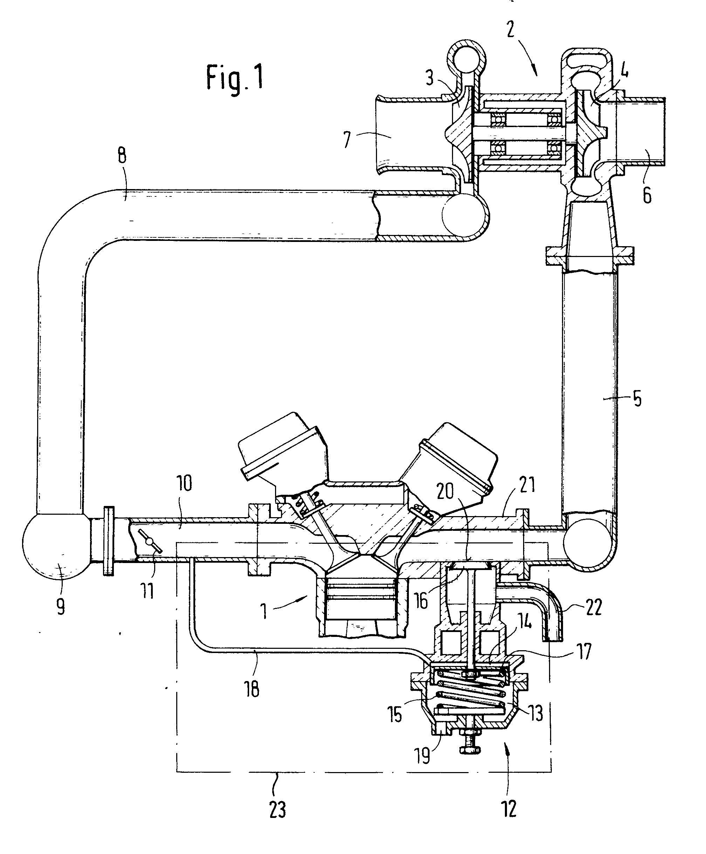

In der Fig. 1 ist eine Brennkraftmaschine 1 mit einem Abgasturbolader 2 versehen, der aus einem Ladegebläse 3 und einer
Abgasturbine 4 besteht. Die Abgasturbine 4 ist durch eine
Abgasleitung 5 mit der Brennkraftmaschine 1 verbunden und weist
zur Abführung der Abgase in die Atmosphäre bzw. zur Zuführung
der Abgase in eine Nachverbrennungseinrichtung eine Abgasleitung 6 auf. Das Ladegebläse 3 ist mit einem Saugrohr 7 und
einer Ladeluftleitung 8 verbunden. Die Ladeluftleitung 8 weist
einen Verteiler 9 auf, von dem ein Ansaugrohr 10 für die
Brennkraftmaschine 1 abzweigt. In dem Ansaugrohr 10 ist eine
mit 11 bezeichnete Drosselklappe angeordnet, die von einem
nicht dargestellten Gaspedal betätigt wird. Ein mit 12
bezeichnetes Ladedruckregelventil weist zwei Druckkammern 13
und 14 auf, die durch eine mit einer Druckfeder 15 zusammenwirkende und mit einem Ventil 16 verbundene Membrane 17
voneinander getrennt sind. Die Druckkammer 14 ist mit einer
Ladedruckleitung 18 mit dem Ansaugrohr 10 und die Druckkammer
13 ist durch eine Entlüftungsöffnung 19 mit der Atmosphäre
verbunden. Das Ladedruckregelventil 12 steuert im gezeigten
Ausführungsbeispiel eine Durchströmöffnung 20 in dem Abgaskrümmer 21 der Brennkraftmaschine 1, durch die die Abgase
teilweise, je nach Stellung des Ventils 16, über einen
Abgaskanal 22 der Atmosphäre zugeführt werden. Angeordnet ist
das Ladedruckregelventil 12 in einem Kühlluftgehäuse 23, das
einem nicht gezeigten Kühlluftgebläse zugeordnet ist und vom
Kühlstrom des Kühlluftgebläses durchströmt wird.

Nach dem Anlassen der Brennkraftmaschine 1 saugt diese
Frischluft an, die über das Saugrohr 7 zum Ladegebläse 3 des
Abgasturboladers 2 gelangt. Durch das Ladegebläse 3 wird die
Ansaugluft über die Ladeluftleitung 8 dem Verteiler 9 und
dem Ansaugrohr 10 der Brennkraftmaschine 1 zugeführt. Die
bei der Verbrennung des Kraftstoff-Luft-Gemisches entstehenden
Abgase werden über den Abgaskrümmer 21 und die Abgasleitung 5 zur Abgasturbine 4 geleitet und gelangen über die Abgasleitung
6 ins Freie. Durch Öffnen der Drosselklappe 11 wird der
Brennkraftmaschine 1 mehr Ansaugluft zugeführt, wodurch die
Abgasmenge und somit auch die Drehzahl des Abgasturboladers 2
ansteigt und der Ladedruck im Ansaugrohr erhöht wird. Durch
weiteres Öffnen der Drosselklappe 11 wird der Brennkraftmaschine 1 mehr Ladeluft zugeführt. Die Abgasmenge erhöht sich
und die Drehzahl des Abgasturboladers 2 sowie der Ladedruck
steigen an. Beim Erreichen eines vorbestimmten Ladedruckes wird
über die Ladedruckleitung 18 das Ladedruckregelventil 12
geöffnet und ein Teil der Abgase unter Umgehung des Ladegebläses 4 in die Atmosphäre geleitet, so daß der Ladedruck
konstant bleibt. Dreht sich die Drosselklappe 11 in Richtung
Schließstellung, wird der Brennkraftmaschine 1 weniger Ladeluft
zugeführt. Die Abgasmenge verringert sich und die Drehzahl des
Abgasturboladers 2 sowie der Ladedruck fallen ab und das
Ladedruckregelventil schließt. Durch das Abblasen der heißen
Abgase wird das Ladedruckregelventil 12 erwärmt. Da das
Ladedruckregelventil 12 jedoch in dem Kühlluftgehäuse 23
angeordnet ist, wird es bei laufender Brennkraftmaschine ununterbrochen vom Kühlstrom umspült, so daß eine Überhitzung des
Ladedruckregelventiles sicher vermieden wird.

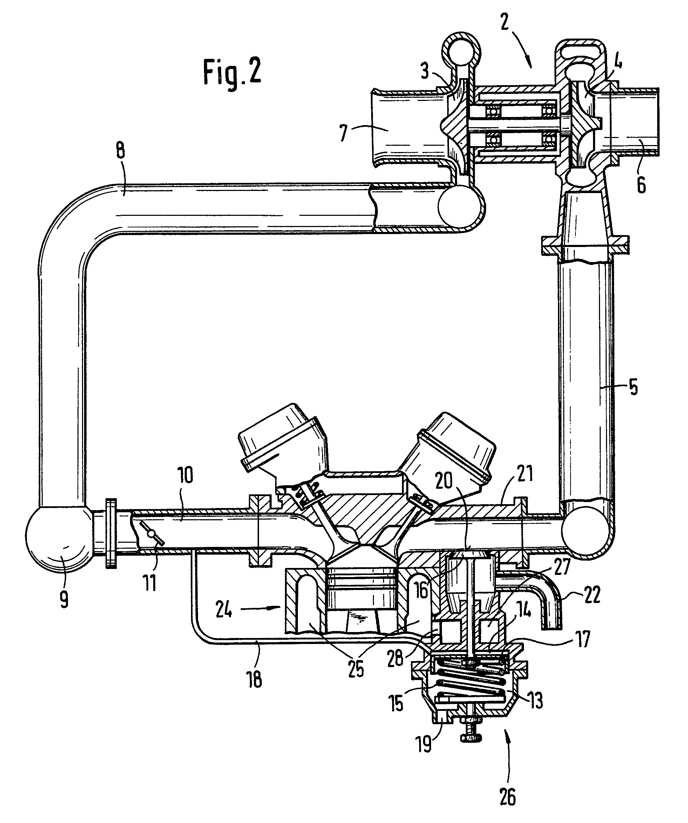

Das Ausführungsbeispiel der Fig. 2 unterscheidet sich von dem
der Fig. 1 nur dadurch, daß der Kühlstrom Wasser statt Luft
ist. Zur Kühlung der mit 24 bezeichneten Brennkraftmaschine
weist diese einen Kühlkanal 25 auf, durch den das den Kühlstrom
bildende Wasser strömt. Benachbart diesem Kühlkanal 25 und in
Wärmetausch mit diesem ist ein Ladedruckregelventil 26
angeordnet. Das Ladedruckregelventil 26 weist ebenfalls einen
Kühlkanal 27 auf, der über eine Durchflußöffnung 28 mit dem
Kühlkanal 25 verbunden ist, so daß auch das Ladedruckregelventil von dem den Kühlstrom bildenden Wasser gekühlt wird und
somit eine Überhitzung des Ladedruckregelventils 26 sicher
vermieden wird.

P a t e n t a n s p r ü c h e

1. Aufgeladene, durch einen Kühlstrom gekühlte Brennkraftmaschine mit einem von einer Abgasturbine angetriebenen Verdichter und einem stromab des Auslaßventiles der Brennkraftmaschine angeordneten, den Abgasstrom vor der Abgasturbine beeinflußbaren und in Abhängigkeit vom Ladeluftdruck gesteuerten Ladedruckregelventil, dadurch gekennzeichnet, daß das Ladedruckregelventil (12, 26) in den Kühlstrom der Brennkraftmaschine (1, 24) integriert ist.

2. Aufgeladene Brennkraftmaschine nach Anspruch 1, dadurch gekennzeichnet, daß der Kühlstrom Luft ist.

3. Aufgeladene Brennkraftmaschine nach Anspruch 1, dadurch gekennzeichnet, daß der Kühlstrom Wasser ist.

4. Aufgeladene Brennkraftmaschine nach Anspruch 2, dadurch gekennzeichnet, daß der durch Luft gebildete Kühlstrom ein Kühlluftgehäuse (23) durchströmt, in dem das Ladedruckregelventil (12) angeordnet ist.

5. Aufgeladene Brennkraftmaschine nach Anspruch 3, dadurch gekennzeichnet, daß das den Kühlstrom bildende Wasser durch einen Kühlkanal (25) der Brennkraftmaschine (26) strömt, benachbart dem das Ladedruckregelventil (26) in Wärmetausch mit dem Kühlkanal (25) angeordnet ist.

6. Aufgeladene Brennkraftmaschine nach Anspruch 5, dadurch gekennzeichnet, daß das Ladedruckregelventil (26) einen Kühlkanal (27) aufweist, der mit dem Kühlkanal (25) der Brennkraftmaschine (26) durch eine Durchflußöffnung (28) verbunden ist.

Fig.1

0032600

1/2

Fig.2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | CH - A - 65 215 (AG BROWN, BOVERI & CIE) <br> * ganzes Dokument * <br> -- | 1-6 |
| | DE - C - 719 281 (F. PORSCHE KG) <br> * Patentansprüche; Seite 2, Zeilen 4 bis 46 * <br> -- | 1,2,4 |
| | DE - A - 2 156 704 (ENGLISH ELECTRIC DIESELS LTD.) <br> * Patentansprüche 1 bis 5 * <br> -- | 1 |
| A | DE - U - 1 962 724 (J. EBERSPÄCHER) <br> *Seite 2,Absatz 2 bis Seite 3, Absatz 1* <br> -- | |
| A | GB - A - 831 706 (CONTINENTAL MOTORS CORP.) <br> * Seite 2, Zeilen 18 bis 28; Zeilen 66 bis 77 * <br> -- | |
| A | US - A - 4 134 370 (KUBOTA LTD.) <br> * Zusammenfassung; Spalte 3, Zeilen 4 bis 9 * <br> -- | |

./..

### KLASSIFIKATION DER ANMELDUNG (Int. Cl.³)

F 02 C 7/12

F 01 P 1/06

F 01 P 3/12

### RECHERCHIERTE SACHGEBIETE (Int. Cl.³)

F 01 P 1/00

F 01 P 3/00

F 02 B 33/00

F 02 B 37/00

F 02 C 7/00

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 02-03-1981 | STÖCKLE |

EPA form 1503.1 06.78

**Europäisches Patentamt**

**EUROPÄISCHER RECHERCHENBERICHT**

0.0.3.2.6.0.0
Nummer der Anmeldung

EP 80 20 1164.3

– Seite 2 –

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | ATZ AUTOMOBILTECHNISCHE ZEITSCHRIFT, Band 80, Nr. 4, 1978 F. INDRA "Entwicklung eines aufgeladenen Ottomotors für Personenwagen mit 73,5 kW Literleistung" Seiten 141 bis 146 * Seite 141, rechte Spalte, Ziffer 3.1 bis Seite 142, Spalte 1, Absatz 1; Fig. 2; Seite 143, Spalte 1, Ziffer 4.1, Absatz 1; Fig. 8 * ———— | 1 |

KLASSIFIKATION DER ANMELDUNG (Int. Cl.³)

RECHERCHIERTE SACHGEBIETE (Int. Cl.³)